# EUROPÄISCHE PATENTSCHRIFT

(11) **EP 0 900 708 B1**
(45) Veröffentlichungstag und Bekanntmachung des Hinweises auf die Patenterteilung: **03.09.2003**
(21) Anmeldenummer: 98890260.7
(22) Anmeldetag: 09.09.1998
(51) Int. Cl.: B61D 19/02

(54) **Druckertüchtigte, zweiflügelig ausgebildete Türe für Schienenfahrzeuge**
Door with two panels for railway vehicles with improved resistance against overpressure
Porte à deux battants pour véhicule ferroviaire avec résistance améliorée contre la surpression

(30) Priorität: 10.09.1997 AT 153097
(43) Veröffentlichungstag der Anmeldung: 10.03.1999
(73) Patentinhaber: Knorr-Bremse Gesellschaft mit beschränkter Haftung, 2340 Mödling (AT)
(72) Erfinder: Fink, Martin, Ing., 3340 Waidhofen a.d. Ybbs (AT)
(74) Vertreter: Patentanwälte BARGER, PISO & PARTNER

(56) Entgegenhaltungen:
- EP-A- 0 624 487
- CH-A- 399 925
- DE-A- 4 019 815

## Beschreibung

Die Erfindung betrifft eine druckertüchtigte Türe für Schienenfahrzeuge.

Derartige Türen sind seit längerem bekannt und werden bei Hochleistungszügen benötigt, da bei der Einfahrt in Tunnels, bei Zugbegegnungen und ähnlichem ein für die Passagiere unangenehmer Druckstoß (Überdruck oder Unterdruck) spürbar wird, wenn der Wagon nicht druckertüchtigt, das heißt luftdicht und verformungsarm, ist.

Bei Türen hat man neben einer entsprechend massiven Bauweise, die die notwendige Steifigkeit sichert, und durch Verriegelungen, die das Türblatt gegen den Rahmen drücken und so Deformationen verhindern, die notwendige Dichtheit durch umlaufende Dichtungen mit mehreren Dichtlippen und/oder durch aufblasbare Dichtungen erreicht. Es war bis jetzt ausschließlich möglich, einflügelige Türen in druckertüchtigter Ausführung zu schaffen, da die Probleme an der freien Dichtkante zwischen den Türflügeln zweiflügeliger Türen nicht beherrschbar waren.

In letzter Zeit werden aber auch Züge mit relativ kurzem Fahrintervall zwischen den Stationen, somit eigentlich typische Nahverkehrszüge, als Hochgeschwindigkeitszüge konzipiert, um entweder die stündlich zu transportierenden Passagierzahlen anzuheben oder weil diese Züge auf einzelnen Streckenabschnitten lange Abstände zwischen den Stationen aufweisen, beispielsweise beim Zubringerdienst zu Flughäfen oder der Verbindung von Städten bzw. Stadtteilen, die durch Meeresarme oder offenes Land voneinander getrennt sind und auf diesen Abschnitten mit hoher Geschwindigkeit fahren sollen, einerseits um die Fahrzeit zu verkürzen, anderseits um die Fernzüge nicht zu behindern. Bei derartigen Zugläufen sind die üblichen einflügeligen Türen während des größten Teiles der Betriebszeit hinderlich beim raschen Passagierumschlag.

Es ist auch nicht möglich, die einflügeligen Türen entsprechend breit auszubauen, da deren Masse zu große Antriebsleistungen im Normalbetrieb notwendig macht, die Aufhängungen unproportional verstärkt werden müßten, ein händischer Notbetrieb praktisch unmöglich wäre und das Öffnen bzw. Schließen über die langen Bewegungswege zu lange dauern würde.

Es gibt zweiflügelige Türen, die während des normalen Zuglaufes stets verschlossen bleiben und daher druckertüchtigt ausgebildet sein können. Derartige Türen sind beispielsweise aus der AT-B 400 426 und aus ZEV-Glasers Annalen, Band 112, Nr. 1, Januar 1988, Seiten 33-35, bekannt und betreffen Übergangs- bzw. Stirntüren von Personenwaggons. Beim ersten und letzten Waggon eines Zuges sind diese Türen Druckstößen ausgesetzt und ständig geschlossen, bei allen anderen gegen Druckstöße geschützt, da innenliegend, und als Übergangstüren ständig geöffnet.

Eine Erwähnung von "gewaltigen Schwankungen im Umgebungsdruck" findet sich in der EP B 56 188, die eigentlich einen U-Bahnwagen betrifft. Das durch diese (und andere erwähnte Störungen) hervorgerufene Flattern der Türflügel wird durch einen vertikal beweglichen Bolzen im Bereich des Türbaumrohres, der in eine Ausnehmung am Türflügel eingreift, verhindert, hat aber mit Druckertüchtigung, die bei dieser Türe auch nicht angestrebt wird, nichts zu tun.

Es besteht, wie oben dargelegt, ein zunehmender Bedarf an druckertüchtigten zweiflügeligen Türen. Die Erfindung hat es sich zur Aufgabe gemacht, eine derartige Türe zu schaffen.

Erfindungsgemäß wird dieses Ziel gemäß Anspruch 1 dadurch erreicht, daß an der Innenseite der Türflügel im Bereich der freien Dichtkante jeweils ein im wesentlichen paralleles Profil über den größten Teil der Türflügelhöhe, bevorzugt zumindest 80 % dieser Höhe, angebracht ist, das die Durchbiegung des Türflügels an dieser Kante normal zur Türblattebene verhindert.

Durch diese Maßnahme wird es möglich, die freie Dichtkante auf gleiche oder ähnliche Weise abzudichten wie die Dichtkanten gegen das Portal. Außerdem wird die schädliche Deformation der Türflügel verhindert, die ansonsten auch bei dicht bleibender Dichtkante einen Druckstoß ins Wageninnere weiterleitete.

In einer vorteilhaften Ausgestaltung der Erfindung ist am Portal im Bereich der freien Dichtkante für jeden der Türflügel sowohl im oberen als auch im unteren Portalteil eine Fangvorrichtung vorgesehen, die mit einem Gegenelement des Türflügels so zusammenwirkt, daß im Zuge der Schließendbewegung die freie Dichtkante jedes Türflügels gegen das Portal gedrückt wird. Dies bewirkt gemeinsam mit der Grundidee der Erfindung, daß die oberen und unteren Dichtkanten auch im Bereich der freien Dichtkante sicher gegen das Portal und die freien Dichtkanten in definierter Lage gegeneinander gepreßt werden.

In einer bevorzugten Fortbildung dieser Ausgestaltung weisen die an sich bekannten Zuhaltungen im Bereich der Nebenschließkante der Türflügel eine Wirkrichtung der Zuhaltekraft auf, die mit der Wirkrichtung der Fangvorrichtung des gleichen Türflügels im wesentlichen übereinstimmt. Damit werden die Zuhaltekräfte auch dazu verwendet, die freien Dichtkanten der Türflügel gegeneinander zu drücken, was ihre Dichtheit weiter erhöht.

Die Erfindung wird im folgenden anhand der Zeichnung näher erläutert. Dabei zeigt
die Fig. 1 eine erfindungsgemäße Türe von Innen,
die Fig. 2 einen Schnitt entlang der Linie II-II in Fig. 1,
die Fig. 3 einen Schnitt entlang der Linie III-III in Fig. 1,
die Fig. 4 einen Schnitt entlang der Linie IV-IV in Fig. 1,
die Fig. 5 einen Schnitt entlang der Linie V-V in Fig. 1 und
die Fig. 6 einen Horizontalschnitt durch den Bereich der freien Dichtkante bei geschlosener Türe.

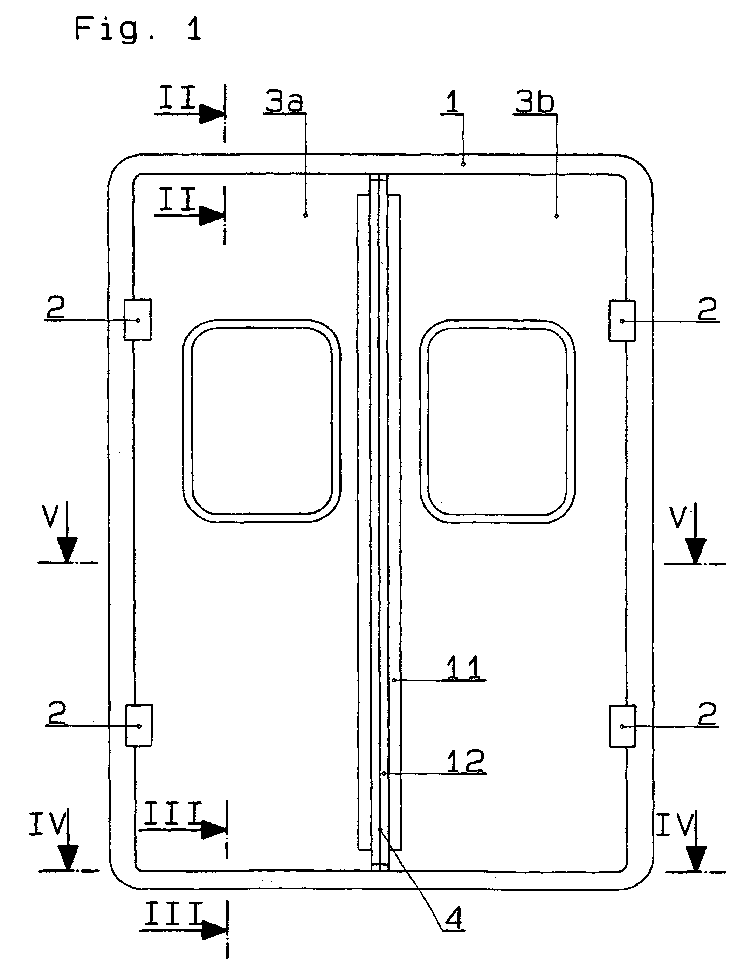

Die Fig. 1 ist eine Innenansicht einer erfindungsgemäßen Türe. Am Portalrahmen 1 sind Zuhaltungen 2 im Bereich der Nebenschließkanten der Türflügel 3a, 3b vorgesehen. Die Hauptschließkanten der Türflügel 3a, 3b bilden im geschlossenen Zustand die freie Dichtkante 4. Um den Portalrahmen umlaufend ist eine in der Darstellung der Fig. 1 verdeckte durchgehende Dichtung angebracht, die die Abdichtung des Portalrahmens 1 gegenüber den Türflügeln 3a, 3b entlang der Nebenschließkanten, des Portalsturzes und des Bodens bewirkt.

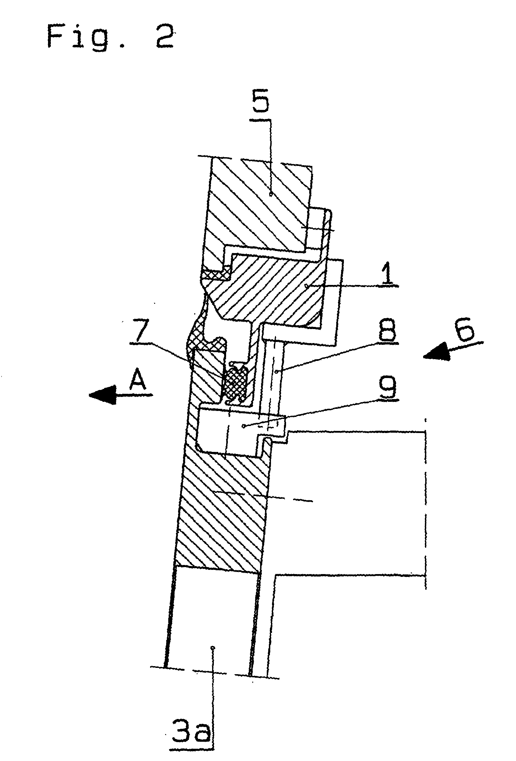

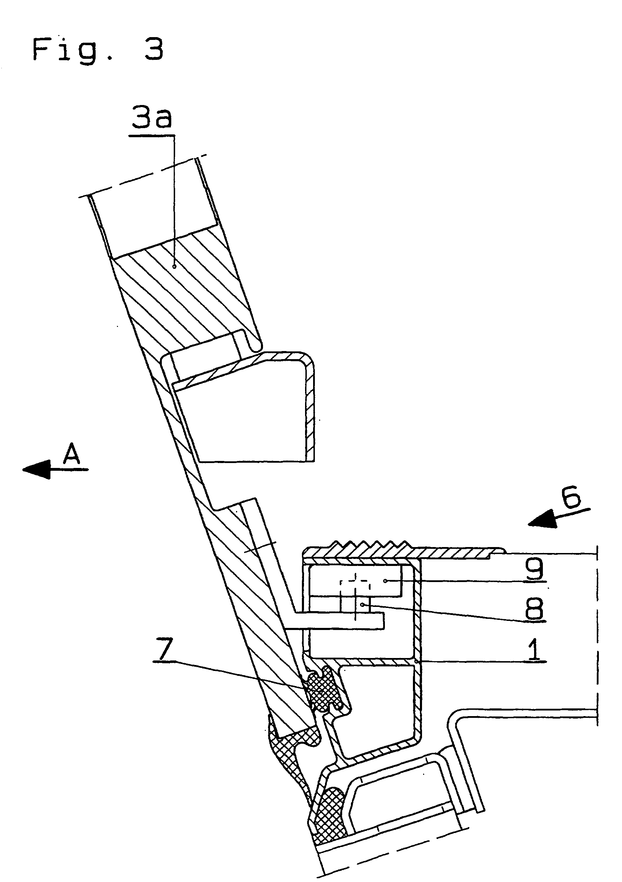

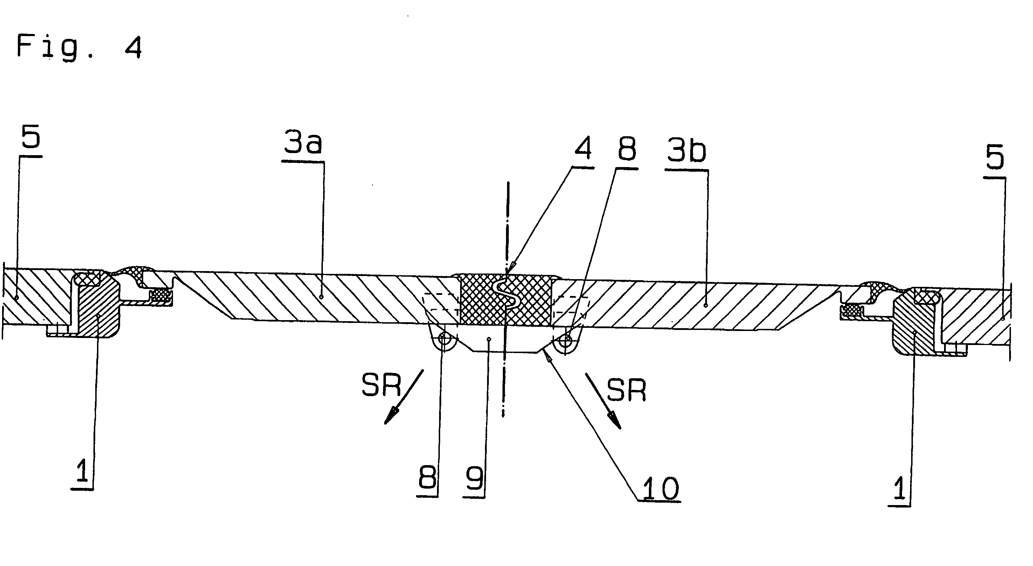

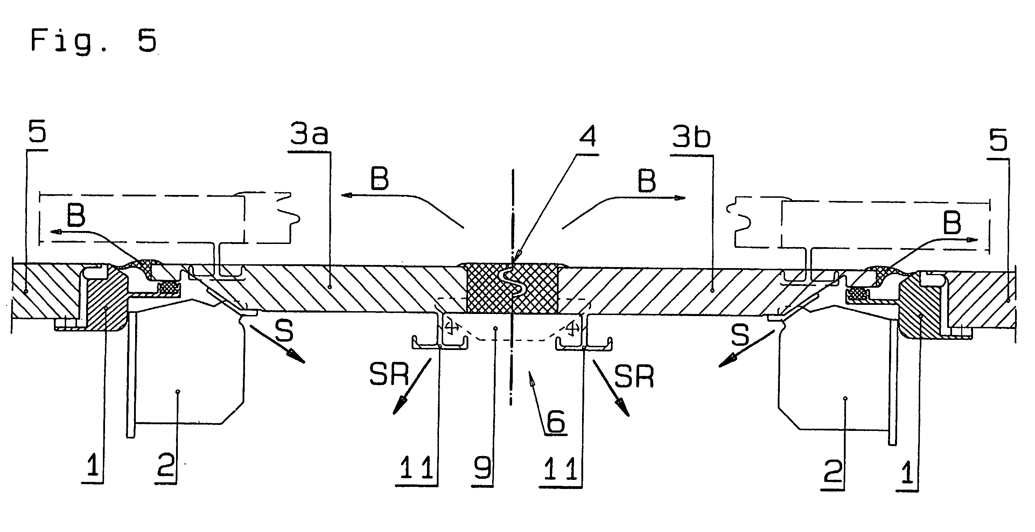

Die Maßnahmen zur Abdichtung der freien Dichtkante 4 sind aus den Fig. 2, 3 besser ersichtlich: In Fig. 2 ist der Schnitt II-II der Fig. 1 im vergrößerten Maßstab dargestellt. Im Wagenkasten 5 ist der Portalrahmen 1 fest und dicht gegenüber dem Wagenkasten angeordnet. Im Bereich der freien Dichtkante 4, somit im Bereich der im wesentlichen vertikal verlaufenden Symmetrieebene des Portalrahmens 1, ist sowohl im Türsturzbereich als auch im Bodenbereich für jeden der Türflügel 3a, 3b eine spezielle Fangvorrichtung 6 vorgesehen, die im geschlossenen Zustand der Tür eine Bewegung des Türflügels 3a nach außen, in Richtung des Pfeiles A verhindert und damit auch ein Undichtwerden der umlaufenden Dichtung 7 verhindert.

Bei der erfindungsgemäßen Tür wird durch das Zusammenwirken der Fangvorrichtung 6 für den Türflügel 3a und der dazu im wesentlichen symmetrisch angeordneten (nicht dargestellten) Fangvorrichtung für den Türflügel 3b auch die Dichtheit der freien Dichtkante 4 bewerkstelligt, da jeder der beiden Türflügel im oberen und analog dazu im unteren Bereich nahe der freien Dichtkante gegenüber dem Portalrahmen und damit auch gegeneinander fixiert wird, was in Verbindung mit der erhöhten Biegesteifigkeit der Türflügel im Bereich der freien Dichtkante, deren Dichtheit sichert.

Die erfindungsgemäße Fangvorrichtung 6 besteht aus einem am Portalrahmen 1 angebrachten Fangbolzen 8 und einer am Türflügel 3a angebrachten Fangplatte 9. Die Fangplatte 9 weist eine Auflauffläche auf, die mit dem Fangbolzen 8 zusammenwirkt. Diese Auflauffläche verläuft zur freien Dichtkante 4 hin in immer größerem Abstand von der Türmittelebene und bildet mit dem Türrahmen eine etwa U-förmige oder V-förmige Ausnehmung, in die der Fangbolzen 8 am Ende der Türschließbewegung zu liegen kommt.

Durch die Schließbewegung des Türflügels 3a wird er durch das Auflaufen der Auflauffläche auf den Fangbolzen 8 ins Wageninnere hin gedrängt, was zu einer sicheren Abdichtung der umlaufenden Dichtung 7 gegenüber dem Türflügel 3a und, wie in der Folge näher erläutert wird, zu einer sicheren Abdichtung der freien Dichtkante 4 führt.

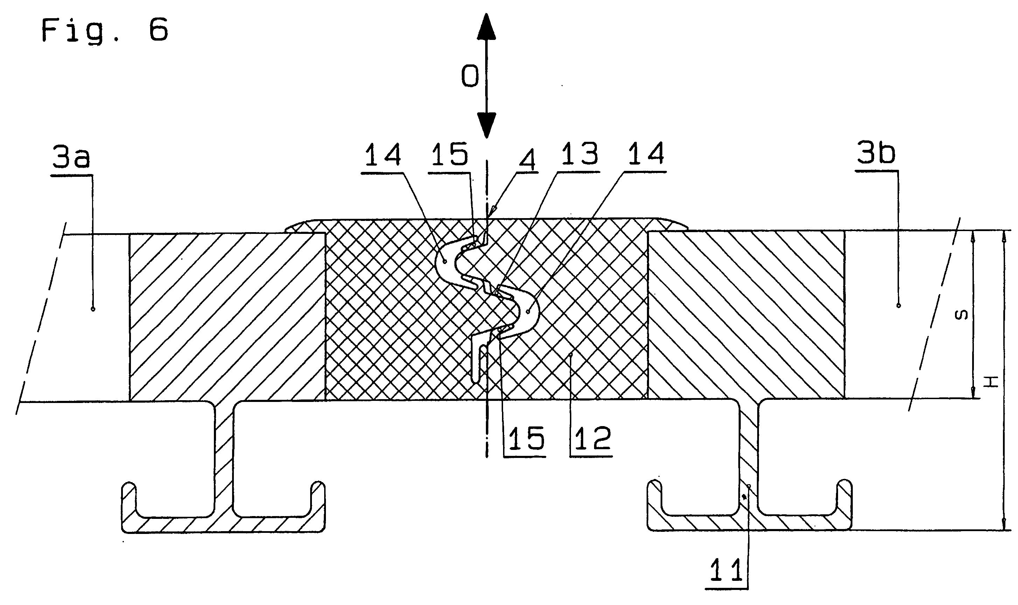

Die Fig. 3 zeigt die analoge Situation am unteren Ende des Türflügels 3a und ist ein Schnitt entlang der Linie III-III der Fig. 1. Der einzige Unterschied zur Situation im Bereich des Türsturzes ist, daß hier der Türflügel 3a einen Fangbolzen 8 trägt und daß am Portalrahmen 1 eine Fangplatte mit schräger Auflauffläche 10 (Fig. 4) fest montiert ist.

Der Aufbau der unteren Fangvorrichtung 6 ist der Fig. 4 näher zu entnehmen. Die Fangplatte 9, die am Portalrahmen 1 befestigt ist und die Fangbolzen 8, jeweils einer an jedem der Türflügel 3a, 3b sind ebenso wie die Lage der Auflauffläche 10 klar ersichtlich. Die Pfeile S geben die ungefähre Richtung der Schließkraft im jeweiligen Bereich der Türblätter 3a, 3b im geschlossenen Zustand der Türe an, die Pfeile B deuten den ungefähren Verlauf der Bewegung der Türblätter 3a, 3b am Ende der Schließbewegung an.

Aus Fig. 5, die einen Schnitt entlang der Linie V-V der Fig. 1 darstellt, sind die Zuhaltungen 2 im Bereich der Nebenschließkanten der Türflügel ersichtlich. Derartige Zuhaltungen sind auf dem Gebiet der druckertüchtigen Türen bekannt und bedürfen keiner näheren Erläuterung. Sie üben normalerweise eine Kraft aus, die im wesentlichen parallel zur Bewegungsrichtung des Türblattes am Ende der Schließbewegung (entgegengesetzt dem Anfang der öffnungsbewegung) verläuft. Im dargestellten Ausführungsbeispiel sind für jeden Türflügel zwei derartige Zuhaltungen 2 vorgesehen, es ist selbstverständlich möglich, mehrere derartige Zuhaltungen im Bereich jeder Nebenschließkante anzuordnen.

Wie aus den Figa. 4 und 5 weiter ersichtlich ist, üben diese Zuhaltungen auf die Türblätter Kräfte S aus, die im wesentlichen parallel zur Auflauffläche 10 der Fangvorrichtung 6 verlaufen. Es bewirken daher die Schließkräfte S ein Verschieben der Türflügel entlang der Auflaufflächen 10 schräg in Richtung zum Wageninneren. Wenn nun im Bereich der freien Dichtkante 4 die Dichtungen der beiden Türflügel 3a, 3b aneinanderstoßen, so wird diesen Kräften ein Widerstand entgegengesetzt, der im wesentlichen in der Türblattebene liegt, aber gemeinsam mit den Klemmkräften der umlaufenden Dichtung 7 (in Fig. 4 und 5 nicht dargestellt) und der Lage der Auflauffläche 10 zu Reaktionskräften führt, die im wesentlichen der Richtung der Pfeile SR in Fig. 4 und 5 entsprechen.

Die Fig. 6 zeigt einen Horizontalschnitt durch die beiden Türflügel 3a, 3b im geschlossenen Zustand im Bereich der freien Dichtkante 4 in stark vergrößertem Maßstab. Die beiden Türflügel sind mit einer profilierten Mitteldichtung 12 versehen, deren zueinandergewandte Oberflächen Auskerbungen bzw. Aus- und Einbuchtungen aufweist, durch die nach Art einer Labyrinth-Dichtung mit zwei Kammern 14 eine besonders wirksame Abdichtung erzielt wird. Darüberhinaus erfolgt durch die gekrümmte Ausbildung der Oberfflächen 13 die Ausbildung einer zusätzlichen Haltekraft in Richtung des Doppel-Pfeiles O.

Erfindungsgemäß ist möglichst unmittelbar im Bereich der freien Dichtkante 4 an jedem der beiden Türflügel 3a, 3b ein Versteifungsprofil 11 vorgesehen, das geometrisch so ausgebildet ist, daß es eine Durchbiegung der Türflügel im Bereich der freien Dichtkante 4 normal zur Ebene der Türflügel verhindert. Da das Flächenträgheitsmoment und damit der von der Geometrie des Versteifungsprofils herrührende Widerstand gegen eine solche Verbindung mit der dritten Potenz des Abstandes h zunimmt, ist es wünschenswert, daß das Profil nicht nur möglichst die gesamte Stärke s des Türflügels einnimmt, sondern größer ist als dieser Abstand.

Es ist erfindungsgemäß dazu vorgesehen, daß das Versteifungsprofil 11 nach innen, ins Wageninnere ragt, wo es als Halteleiste, als Handhabe im Falle der Notbetätigung der Türe und, wie aus der Fig. 5 hervorgeht, im geöffneten Zustand als Abdeckung des Spaltes zwischen dem Wagenkasten 5 bzw. dem Portalrahmen 1 und den Zuhaltungen 2 dient und so die Anbringung einer gesonderten Abdeckung überflüssig macht.

Wie aus Fig. 5 hervorgeht, ist die maximal zu wählende Größe für den Abstand h im wesentlichen durch die Bewegungsbahn der Türflügel gegenüber dem Portalrahmen 1 gegeben und wird bevorzugt weitgehend ausgenutzt.

Die Erfindung ist nicht auf das dargestellte Ausführungsbeispiel beschränkt, so kann auch im oberen Bereich der freien Dichtkante 4 die Tür mit einem Fangbolzen und der Portalrahmen mit einer Fangplatte versehen sein oder es kann umgekehrt auch im Bodenbereich des Portalrahmens 1 jeder Türflügel eine Fangplatte tragen und der Portalrahmen mit 2 korrespondieren Fangbolzen versehen sein, wenn dies auch aus Gründen der Verschmutzungsgefahr nicht bevorzugt wird.

Es können die einzelnen genannten Maßnahmen auch jeweils für sich verwendet werden, dies hängt von dem Ausmaß ab, in dem die Tür druckertüchtigt ausgebildet sein soll. So ist es, insbesondere bei von Haus aus schweren Türflügeln durchaus möglich, auf die Anbringung eines Versteifungsprofils 11 zu verzichten, aber die Mitteldichtung 12 erfindungsgemäß auszugestalten und so zu druckertüchtigten Türen zu kommen, die für die eingangs skizzierten Anwendungsbereiche ausreichend sind, wenn auch eine Kombination der einzelnen erfindungsgemäßen Merkmale zu einer fortschreitend besseren Druckertüchtigung führt.

Das Versteifungsprofil 11 wird bevorzugt aus Aluminium bzw einer Aluminiumlegierung hergestellt, was wegen der geringen Dichte dieses Materials bei gleichzeitiger hoher Steifigkeit und Korrosionsfestigkeit bevorzugt wird. Es ist selbstverständlich möglich, in Spezialfällen auch andere, bevorzugt metallische, Werkstoffe vorzusehen.

Die Ausbildung der Mitteldichtung als Labyrinthdichtung mit zwei Labyrinthdichtkammern 14 ist im obersten und untersten Randbereich des Türflügels für einen kurzen, in Fig. 1 angedeuteten Abschnitt in eine Dichtung mit nur einer Labyrinthdichtkammer überzuführen, um einen entsprechenden Anschluß an die portalseitige Dichtung sicherzustellen, was aber wegen der großen Steifigkeit und Lagegenauigkeit gerade in diesen Bereichen der Dichtfläche und des nur äußerst kurzen Abschnittes, der so ausgebildet ist, der Druckertüchtigung der Tür keinen Abbruch tut.

Der Antrieb und die Steuerung der Tür erfolgt auf konventielle Weise und kann die verschiedensten bekannten Systeme erfassen, so kann der Antrieb elektrisch, pneumatisch oder auch hydraulisch erfolgen und es kann die Ausstellbewegung auf unterschiedliche Weise bewerkstelligt werden, was für den Fachmann auf dem Gebiet des Schwenkschiebetürbaues keiner weiteren Erläuterung bedarf.

## Patentansprüche

1. Druckertüchtigte zweiflügelig ausgebildete, Türe für Schienenfahrzeuge, **dadurch gekennzeichnet, daß** jeder der Türflügel (3a, 3b) im Bereich der freien Dichtkante (4) zwischen den beiden Türflügeln (3a, 3b) mit einem Versteifungsprofil (11), das über den größten Bereich, bevorzugt über zumindest 80 %, der Höhe des Türflügels reicht, versehen ist.

2. Druckertüchtigte Türe nach Anspruch 1, **dadurch gekennzeichnet, daß** das Versteifungsprofil (11) in der Richtung normal zur Türblattebene eine Höhe (h) aufweist, die größer ist als die Dicke (s) des Türflügels im Bereich der freien Dichtkante (4) und nach innen vorspringt.

3. Druckertüchtigte Türe nach Anspruch 2, **dadurch gekennzeichnet, daß** das Versteifungsprofil (11) eine Höhe (h) aufweist, die im geöffneten Zustand der Türe den Spalt zwischen der Innenseite des Türflügels (3a, 3b) und dem Portalrahmen (1) bzw. Zuhaltungen (2) im wesentlichen abdeckt.

4. Druckertüchtigte Türe nach einem der vorstehenden Ansprüche, **dadurch gekennzeichnet, daß** die zwei Türflügel (3a, 3b) jeweils an ihrer freien Dichtkante (4) eine elastische Dichtung (12) tragen, die zumindest über den größten Teil der Höhe der Türflügel reichen und zueinander gewandt gekrümmte Oberflächen (13) haben, die zwei Kammern (14) nach Art einer Labyrinthdichtung ausbilden, wobei im Bereich der Kammern bevorzugt zusätzliche Dichtlippen (15) vorgesehen sind.

5. Druckertüchtigte Türe nach einem der vorstehenden Ansprüche, **dadurch gekennzeichnet, daß** am Portalrahmen (1) im Bereich der freien Dichtkante (4) sowohl im Boden- als auch im Sturzbereich Fangvorrichtungen (6) vorgesehen sind, die die Lage der Türflügel (3a, 3b) im geschlossenen Zustand gegenüber dem Portalrahmen fixieren.

6. Druckertüchtigte Türe nach Anspruch 5, **dadurch gekennzeichnet, daß** die Fangvorrichtungen (6) aus Fangbolzen (8) und zugehörigen Fangplatten (9) bestehen, die längs jeweils einer Auflaufebene (10) zusammenwirken, wobei einer der Bestandteile (9 oder 10) am Portalrahmen (1) und der andere Bestandteil (10 oder 9) am Türflügel (3a, 3b) befestigt ist.

7. Druckertüchtigte Türe nach Anspruch 5 oder 6, **dadurch gekennzeichnet, daß** die Fangvorrichtungen (6) die Türflügel (3a, 3b) im wesentlichen in der Richtung führen, in die die Zuhaltungen (2) sie drücken.

## Claims

1. Pressure-reinforced doors of two-leaf design for railway vehicles, **characterised in that** each of the door leaves (3a,3b) is provided in the vicinity of the free sealing edge (4) between the two door leaves (3a,3b) with a reinforcing profile (11) which extends over the greatest extent, preferably over at least 80 %, of the height of the door leaf.

2. Pressure-reinforced doors according to Claim 1, **characterised in that** in a direction normal to the door leaf plane the reinforcing profile (11) is of a height (h) which is greater than the thickness (s) of the door leaf in the vicinity of the free sealing edge (4) and projects inwardly.

3. Pressure-reinforced doors according to Claim 2, **characterised in that** the reinforcing profile (11) is of a height (h) which, in the open position of the doors, substantially conceals the gap between the inside of the door leaf (3a,3b) and the portal frame (1) or retaining means (2).

4. Pressure-reinforced doors according to any one of the preceding Claims, **characterised in that** at their respective free edge (4) the two door leaves (3a,3b) are provided with a resilient seal (12), which seals extend at least over the majority of the height of the door leaves and have mutually facing curved surfaces (13) which form two chambers (14) in the manner of a labyrinth seal, preferably additional sealing lips (15) being provided in the vicinity of the chambers.

5. Pressure-reinforced doors according to any one of the preceding Claims, **characterised in that** safety catches (6) are provided on the portal frame (1) in the vicinity of the free sealing edge (4), as well as in the base region and in the lintel region, which locate the door leaves (3a,3b) in the closed position relative to the portal frame.

6. Pressure-reinforced doors according to Claim 5, **characterised in that** the safety catches (6) comprise catch bolts (8) and associated catch plates (9) which co-operate along a respective approach plane (10), wherein one of the components (9 or 10) is fastened to the portal frame (1) and the other component (10 or 9) is fastened to the door leaf (3a,3b).

7. Pressure-reinforced doors according to Claim 5 or 6, **characterised in that** the safety catches (6) guide the door leaves (3a,3b) substantially in the direction in which they are pressed by the retaining means (2).

## Revendications

1. Portes résistantes à la surpression, configurées avec deux battants pour les véhicules sur rails, **caractérisées en ce que** chaque battant de porte (3a, 3b) est prévu dans la zone de l'arête d'étanchéité libre (4) entre les deux battants de porte (3a, 3b) avec un profil de renforcement (11), qui sur la plupart de la zone atteint de préférence au moins 80% de la hauteur du battant de porte.

2. Portes résistantes à la surpression selon la revendication 1, **caractérisées en ce que** le profil de renforcement (11) comprend en direction perpendiculaire sur le plan du vantail de porte une hauteur (h), qui est plus grande que l'épaisseur (s) du battant de porte dans la zone de l'arête d'étanchéité (4) et fait saillie vers l'intérieur.

3. Portes résistantes à la surpression selon la revendication 2, **caractérisées en ce que** le profil de renforcement (11) comprend une hauteur (h), qui à l'état ouvert de la porte couvre pour l'essentiel la fente entre le côté intérieur du battant de porte (3a, 3b) et le portique (1) ou les arrêts de gâchette (2).

4. Portes résistantes à la surpression selon l'une quelconque des revendications précédentes, **caractérisées en ce que** chacun des deux battants de porte (3a, 3b) porte sur son arête d'étanchéité libre (4) une garniture élastique (12), atteignant au moins la plupart de la hauteur des battants de porte et ayant des surfaces courbées (13) retournées l'une vers l'autre, qui forment deux chambres (14) à la façon d'une garniture à labyrinthe, moyennant quoi dans la zone des chambres sont prévues de préférence des lèvres d'étanchéité (15) supplémentaires.

5. Portes résistantes à la surpression selon l'une quelconque des revendications précédentes, **caractérisées en ce qu'**au portique (1) dans la zone de l'arête d'étanchéité libre (4) sont prévus des dispositifs de prise (6) tant dans la zone du sol que dans celle du linteau, qui fixent à l'état fermé la position des battants de porte (3a, 3b) contre le portique.

6. Portes résistantes à la surpression selon la revendication 5, **caractérisées en ce que** les dispositifs de prise (6) consistent en boulons de prise (8), avec les plaques de prise (9) leur appartenant, qui agissent ensemble le long d'un plan de rampe (10), moyennant quoi l'une des parties constitutives (9 ou 10) est attachée au portique(1) et l'autre partie constitutive (10 ou 9) est attachée au battant de porte (3a, 3b).

7. Portes résistantes à la surpression selon la revendication 5 ou 6, **caractérisées en ce que** les dispositifs de prise (6) conduisent pour l'essentiel les battants de porte (3a, 3b) dans la direction dans laquelle les poussent les arrêts de gâchette (2).
